# EUROPEAN PATENT SPECIFICATION

(11) **EP 1 290 829 B1**
(45) Date of publication and mention of the grant of the patent: **08.09.2004**
(21) Application number: 01938429.6
(22) Date of filing: 13.06.2001
(51) Int. Cl.: H04L 12/28, H04L 29/08, H04M 1/725

(54) **CALL HANDLING DEVICE FOR CONNECTING A WIRELESS COMMUNICATIONS DEVICE TO A COMMUNICATIONS NETWORK**
ANRUFSTEUERUNGSGERÄT ZUR VERBINDUNG EINES DRAHTLOSEN KOMMUNIKATIONSGERÄTES MIT EINEM KOMMUNIKATIONSNETZ
DISPOSITIF D'ACHEMINEMENT DES APPELS QUI PERMET DE RELIER UN DISPOSITIF DE COMMUNICATION SANS FIL A UN RESEAU DE COMMUNICATIONS

(30) Priority: 13.06.2000 GB 0014431; 01.11.2000 GB 0026741
(43) Date of publication of application: 12.03.2003
(73) Proprietor: Red-M (Communications) Limited, Wexham, Slough SL3 6PJ (GB)
(72) Inventor: AUSTIN, Paul, Dunnington, York YO19 5N (GB); FRANKS, Roland, Hazlemere, Buckinghamshire HP15 7QX (GB)
(74) Representative: Finnie, Peter John
(86) International application number: PCT/GB2001/002607
(87) International publication number: WO 2001/097457

(56) References cited:
- EP-A- 0 930 766
- EP-A- 0 949 790
- PEHRSON S: "WAP-THE CATALYST OF THE MOBILE INTERNET" ON - ERICSSON REVIEW, ERICSSON. STOCKHOLM, SE, no. 1, 2000, pages 14-19, XP000908190 ISSN: 0014-0171

## Description

### Field of the Invention

The present invention relates to a call handling device for connecting a wireless enabled communications device to a communications network, the call handling device being adapted to provide call control features to the user.

### Background to the Invention

Currently, the majority of computer networks utilize some form of wiring for interconnecting the computers on the network. These systems suffer from the major drawbacks that wiring has to be installed within the building to enable the network to be fitted, and additionally, should a fault with the wiring develop, this can lead to the need for wiring to be replaced. In addition to this, the wiring can cause problems due to interference with other electrical equipment within the building, as well as only having a limited bandwidth. Furthermore, different networks require different wiring standards which further leads to the complexity of installing networks in buildings.

Wireless types of networks are now becoming more wide spread. Wireless communication can be broken down into one of three main categories, radio, cellular and local. Radio communications are used for mainly long distance work, and cellular communications are used for mobile phones and the like. At present, the cellular system can also be used to provide limited Internet access using WAP (Wireless Application Protocol) phones. Internet access is also possible via a cellular phone, a GSM modem and a PC/PDA.

In addition to this, the local communication standards are also provided for short-range radio communication. These systems have been used within the production of wireless networks.

One such short-range radio communication radio system is Bluetooth which can be used to provide customer premises wireless links for voice, data and multimedia applications.

A Bluetooth Radio Frequency (RF) system is a Fast Frequency Hopping Spread Spectrum (FFHSS) system in which packets are transmitted in regular time slots on frequencies defined by a pseudo random sequence. A Frequency Hopping system provides Bluetooth with resilience against interference. Interference may come from a variety of sources including microwave ovens and other communication systems operating in this unlicensed radio band which can be used freely around the world. The system uses 1 MHz frequency hopping steps to switch among 79 frequencies in the 2.4GHz Industrial, Scientific and Medical (ISM) band at 1600 hops per second with each channel using a different hopping sequence.

The Bluetooth baseband architecture includes a Radio Frequency transceiver (RF), a Link Controller (LC) and a Link Manager (LM) implementing the Link Manager Protocol (LMP).

Bluetooth version 1.1 supports asymmetric data rates of up to 721 Kbits per second and 57.6Kbits per second and symmetric data rates of up to 432.5Kbits per second. Data transfers may be over synchronous connections, Bluetooth supports up to three pairs of symmetric synchronous voice channels of 64Kbits per second each.

Bluetooth connections operate in something called a piconet in which several nodes accessing the same channel via a common hopping sequence are connected in a point to multi-point network. The central node of a piconet is called a master that has up to seven active slaves connected to it in a star topology. The bandwidth available within a single piconet is limited by the master, which schedules time to communicate with its various slaves. In addition to the active slaves, devices can be connected to the master in a low power state known as park mode, these parked slaves cannot be active on the channel but remain synchronised to the master and addressable. Having some devices connected in park mode allows more than seven slaves be attached to a master concurrently. The parked slaves access the channel by becoming active slaves, this is regulated by the master.

Multiple piconets with overlapping coverage may co-operate to form a scatternet in which some devices participate in more than one piconet on a time division multiplex basis. These and any other piconets are not time or frequency synchronised, each piconet maintains is own independent master clock and hopping sequence.

The Bluetooth specification has therefore been designed for the primary purpose of allowing electronic devices to communicate with each other. Thus, the system is typically utilized in an environment in which one-to-one communication is achieved between two Bluetooth enabled devices.

In the situation in which voice communication is being provided, this will typically be achieved either using a handset, a Bluetooth enabled phone, a headset, or a voice communication enabled Bluetooth PDA. The user will utilize the Bluetooth device as a handset in the normal way. Signals are then transferred via a Bluetooth link to some form of connection to a network. Thus for example, this may be achieved by establishing a Bluetooth link with a desktop PC, or the like. Voice data received from the Bluetooth enabled communications device will then be transferred from the PC to a local area network and then on either to a PBX (private branch exchange), the Internet (for voice over IP (VOIP)), or the PSTN (public switched telephone network).

In the case of normal telephone calls connected either via a PBX (Private Branch Exchange) a PSTN (Public Switch Telephone Network) or a LAN/WAN (Local/Wide Area Network) using a protocol such as VolP or VODSL, a number of additional call features are typically available, such as call transfer, call forward and the like. These allow users to perform more complicated operations than simply making or ending calls.

In order to perform these features, telephones coupled to the networks may be provided with specific programmable buttons. Each button is programmed to generate a respective control signal which is then interpreted by the respective communications network to perform the requested call handling operation. Thus for example, pressing a call transfer button will generate a signal causing a call transfer sequence to be initiated by the PBX to which the phone is connected. Alternatively, the call transfer signal is formed from a specific digit sequence (e.g. corresponding to the dial tones for "*37#").

Currently, the Bluetooth system does not provide any specific supplementary call handling features within its own operating protocol. This therefore limits the features available to a person performing a telephone call via a Bluetooth connection. Furthermore, the majority of Bluetooth enabled communications devices have a limited number of buttons due to their size and as a result, specific buttons for providing call transfer features and the like are not generally provided. Accordingly, the user of the system is often limited to simply making or ending calls and may not have the option of using the higher level call control features, such as call transfer and the like, other than through the use of dialed digit sequences.

This problem is also encountered with the use of Bluetooth enabled headsets. This type of headset is provided to allow users to receive or make voice calls via a Bluetooth connection. The headsets are only provided with a single button for answering the call and a volume control. Accordingly, the headsets are normally adapted to communicate with a telephone or PDA allowing the user to receive calls adapted to communicate with a telephone or PDA allowing the user to receive calls destined for the telephone or PDA. In a similar manner, the telephone or PDA can be used to initiate a call which can then be transferred to the headset. However, this still results in limited call handling by the headset.

EP0949790A discloses a method for presenting information, by matching those call control features available on a network to those features available on a communications device. The call control features are implemented by a user's end point device. The method does not teach the provision of additional call control features not ordinarily available on a communications device.

### Summary of the Invention

In accordance with the present invention, we provide a call handling device for connecting a wireless communications device having limited call control features to a communications network, the call handling device being adapted to provide additional call control features to a user of the wireless communications device, the call handling device comprising:
a transceiver for maintaining a wireless connection between the call handling device and the wireless communications device;
at least one port for connecting the call handling device to the communications network; and,
a processor for controlling the connections, the processor being adapted to:
   determine control information representing the call control features available for the current connections;
   transfer the control information to the user via a wireless connection;
   determine the call control features selected by the user; and,
   implement the selected call control features.

Accordingly, the present invention provides a call handling device which allows call control features to be implemented. This is achieved by transferring control information indicative of the call control features available to the user, via a wireless connection. The call control features selected by the users are then implemented by the call handling device, making the call control features available to the user.

Typically the processor of the call handling device is adapted to perform the step of transferring the control information to the user by:
establishing a second wireless connection with an alternative communications device used by the user; and,
transferring the control information to the alternative communications device.

Thus, the present invention allows the control information to be sent to an alternative communications device. This is useful, for example, when the user of the system is using a portable handset or the like to make the telephone call. In this case, with the keypad located on the handset it is typically difficult to push buttons as well as speak on the phone simultaneously. The present invention overcomes this by having the control information sent directly to a different device, such as a PDA, so that it can be presented to the user and then responded to, without disturbing the current phone call. However the control information can of course be sent to the same wireless communications device such that only one wireless connection and one wireless device is required for the user to not only make calls, but also carry out higher level call control features such as call transfer and the like.

Typically the call handling device usually further comprises a store for storing a number of sets of control information, and wherein the processor is adapted to carry out the step of determining the control information representing the control features available for the current connections by:
monitoring the status of any connections with the wireless communications device; and,
selecting one of the number of sets of control information stored in the store in accordance with the call status.

Accordingly, the type of control information presented to the user will vary depending on the status of the call. Thus, if for example no call is currently underway and the user indicates that call control features are required, this may present to the user a list of options including dialing a predetermined or undefined number, answering a call or the like. Once the call is in progress however, the control information presented to the user can be changed to allow call control features such as call transfer to be implemented. This is not however essential to the present invention and, in particular, the same options may be presented to the user at all times with only appropriate call control features being implementable at a given time.

The processor is preferably adapted to transfer the control information to the user as one of a Web or WAP page. Accordingly, this provides a well known currently implementable format for presenting the control information to the user on a wide range of devices. This can be achieved by transferring HTML, or similar files, to the user's device and then displaying the information using appropriate browser software. Alternatively however, the control information could be transferred to the user as a WAP page. Basic text, or the like, could also be used.

The processor is typically adapted to perform the step of determining the call control features selected by the user by monitoring control signals received via the wireless connection from the user. Thus, the user is able to respond to the presented control information by generating a control signal which is received by the processor and used to implement the desired call control features.

The processor is adapted to implement the selected call control features by generating control signals for transfer to the communications network, the communications network being responsive to the control signal to perform the desired call control features. Thus, the call handling device is preferably able to generate signals including the correct tone sequences for call transfer operations and the like. These tone sequences would be recognized by the respective communications network, and then implemented as necessary.

From the above it will be clear that the communications network is typically a PBX although any form of voice communications enabled network could be used. Thus for example, the call handling device could be coupled to the Internet, the PSTN or the like.

As mentioned above, the processor is adapted to transfer call information to the user's PDA. However, other Bluetooth enabled devices, such as lap-tops, palm-tops, desk top PCs, a desk telephone, or the like, could be used.

The call control features usually include features of call dialling, call transfer, call hold and call forward although almost any call control feature can be implemented.

Preferably the call handling device is adapted to establish wireless connections in accordance with the Bluetooth protocol. Accordingly, in this case the transceiver typically comprises a Bluetooth transceiver.

Accordingly, the present invention also provides a communications system adapted to provide call control features to the user of the system, the system comprising a call handling device according to the present invention and a wireless communications device.

In this case the wireless communications device is preferably a Bluetooth enabled communications device.

### Brief Description of the Drawings

Examples of the present invention will now be described in detail with reference to the accompanying drawings, in which:-
Figure 1 is a schematic diagram of a network according to the present invention;
Figure 2 is a schematic diagram of the Access Server device of Figure 1;
Figure 3 is a schematic diagram of the Access Point device of Figure 1; and,
Figures 4 to 7 are examples of alternative network arrangements.

### Detailed Description

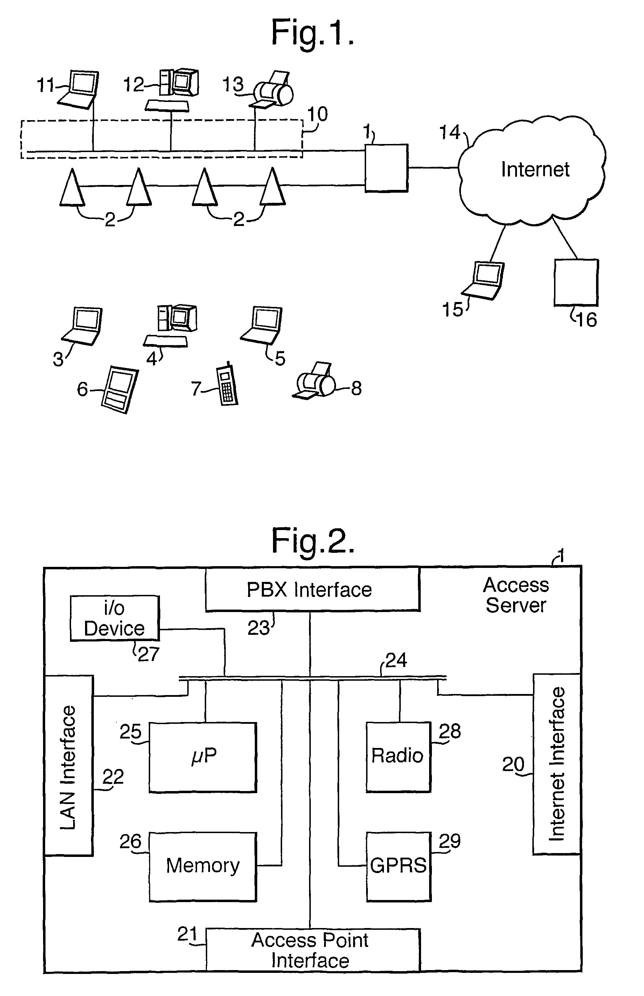

Figure 1 shows a basic network arrangement according to the present invention. As shown, the network includes a wireless Internet Access Server 1 which is coupled to a number of local area network Access Points 2. The Access Points 2 are designed to communicate with a number of Bluetooth enabled communications devices 3,4,5,6,7,8 using Bluetooth connections.

In this scenario, the Bluetooth communication devices 3,4,5,6,7,8 can include devices, such as a personal computer, laptop or the like which is fitted with a Bluetooth adapter, a specialised Bluetooth laptop, a Bluetooth enabled phone or mobile phone, a WAP Internet phone, a Bluetooth enabled personal data assistant (PDA) or a Bluetooth headset, which are capable of establishing voice calls via the Bluetooth connections with the Access Points.

In fact under normal circumstances, the Access Server and the Access Points can communicate with any Bluetooth enabled device. These include not only PCs, PDAs and laptops but any of the following that have a Bluetooth port; a truck, a refrigerator, a baggage trolley, a keyboard etc, although this is not relevant for the purpose of the present invention.

The Access Server 1 is also optionally connected to a local area network 10 having a number of end stations 11,12,13. In this example, this allows the Access Server to be integrated with currently existing local area networks within a building.

The Access Server 1 can also be connected to a remote communications network 14, which in this example is the Internet. This allows the communications devices coupled to the Access Server to communicate with remote users 15 or Access Servers of other remote sites 16.

Accordingly, the Access Points 2 allow voice calls to be made and received by the Bluetooth communications devices 3,4,5,6,7,8, in turn allowing voice calls to be made using the LAN 10 and the Internet 14, via the Access Server 1. In this case, the Access Server operates as a call controller, as will be described in more detail below.

The Access Server is shown in more detail in Figure 2.

The Access Server may include an Internet interface 20, an Access Point interface 21, a LAN interface 22 and a PBX interface 23, all of which are interconnected via a bus 24. A microprocessor 25 and a memory 26 which are provided for processing and storing the operating software, are also coupled to the bus 24. An input/output device 27 is also provided.

The processor 25 is typically an x86 type processor operating a Linux type operating system such as Red Hat Linux. This is particularly advantageous as the Linux system is widely used as the operating system for a number of different software applications. Accordingly, the system can implement a wide variety of standard operating software for network servers and the like, as well as allowing third parties the opportunity to modify existing software and develop their own software. However, any suitable form of processing system may be used.

In addition to these features, it is also possible to include a number of Bluetooth radios 28, and a GPRS transceiver 29, both of which are coupled to the BUS 24.

A range of radios are supported, including standard and enhanced range devices.

Similarly, the Bluetooth design of the Access Server and the Access Point offers capabilities beyond the basic Bluetooth specification. These include advanced control of Bluetooth device state to improve throughput, and control of broadcast and multicast traffic streams to/from Bluetooth devices.

In this example, four different interfaces 20,21,22,23 are shown. However, it is not essential for the Access Server 1 to include all of these interfaces, depending on the particular configuration which is to be used, as will be explained in more detail below.

Thus, in order to enable Bluetooth voice calls to be made between the Bluetooth communication devices and remote third parties, all that is required is forthe Access Server to include the Access Point interface 21, with appropriately connected Access Points 2, and one of the Internet interface 20, the LAN interface 22, or the PBX interface 23, coupled to an appropriate communications device. Thus, for example, the LAN interface 22 could be coupled to an Ethernet phone via the LAN 10. Further examples will be described in more detail below. Alternatively, the Access Point interface need not be used if the Bluetooth radios 28 are used instead. However, this will become clearer when various network configurations used by the Access Server are described in more detail below.

The Internet interface 20 is used primarily for providing an ISDN connection to an Internet service provider. However, the system can be reconfigured to use Ethernet, DSL or a POTS modem for Internet connectivity. Thus, this allows VolP calls to be transferred via the Internet 14.

The Access Point interface 21 is effectively an Ethernet interface which is adapted to operate with the Access Points, as will be explained in more detail below.

The LAN interface 22 is normally configured to be an Ethernet interface. However, this can be adapted to provide token ring or other forms of communication as required. Accordingly the LAN 10 can comprise an Ethernet, Token Ring or other similar network.

In order to be able to handle different communications protocols, each of the interfaces 20,21,22 will include a processor and a memory. The processor operates software stored in the memory which is appropriate for handling the required communications protocol. Thus in the case of the LAN interface 21, the default protocol is Ethernet. However, if alternative protocols such as Token Ring or ATM are used, then the software is adapted to translate the format of the data as it is transferred through the respective interface.

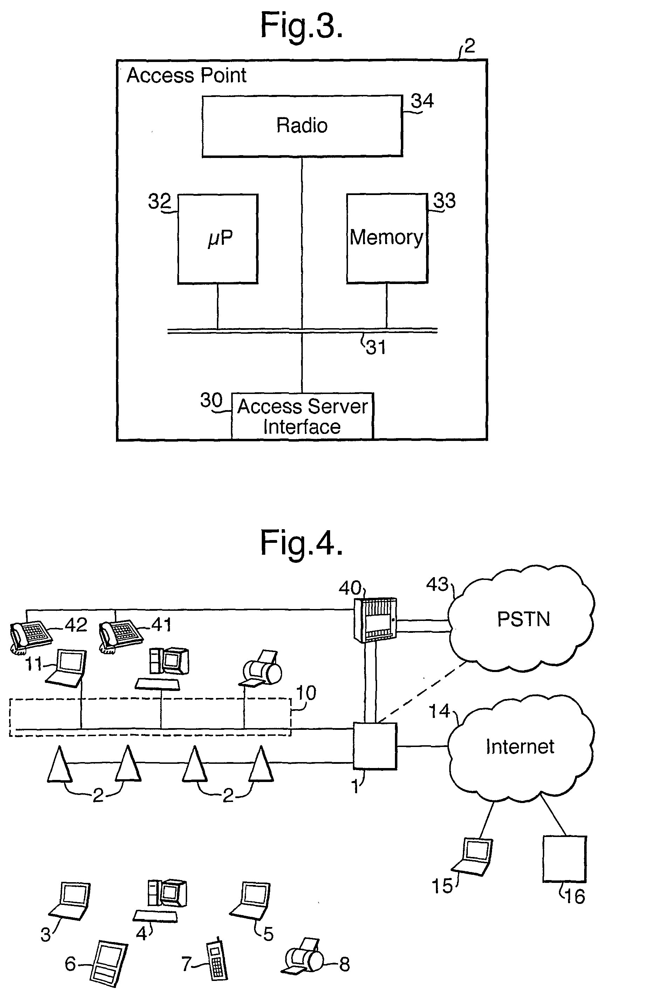

An Access Point according to the present invention is shown in Figure 3. The Access Point includes an Access Server interface 30, for connecting the Access Point to the Access Server. The Access Server interface 30 is connected via a BUS 31 to a processor 32 and a memory 33. The BUS is also coupled to a number of Bluetooth radios 34 (only one shown) providing enhanced capabilities such as improved bandwidth and call density.

The processor 32 is typically a processor system that can include one or more processors, of the same or different types within the system. For example, the processor system could include, but is not be limited to, a RISC (Reduced Instruction Set Computer) processor and a DSP (Digital Signal Processor) processor.

In use, the Access Points are connected to the Access Point interface 21 using a daisy chain Ethernet connection. This is particularly advantageous as it allows a large number of Access Points 2 to be connected in series via a single wire to the Access Point interface 21. In this case, power can be supplied to the Access Points 2 either via the connection from the Access Server 1, or via separate power supplies (not shown) connected to each of the Access Points 2 as required.

As an alternative however, the Access Points 2 may be connected to the Access Server 1 via an Ethernet hub. This allows a larger number of Access Points 2 to be coupled to a single Access Server 1.

In use, each Access Point 2 is able to communicate with a number of communications devices 3,4,5,6,7,8 which are in range of the respective radio 34. Any data received at the radio is transferred to the memory 33 for temporary storage. The processor 32 will determine from the data the intended destination. If this is another Bluetooth device within range of the Access Point, the data will be transferred via the radio 34 to the appropriate communications device 3,4,5,6,7,8. Otherwise the data will be transferred via the BUS 31 to the Access Server interface 30 and on to the Access Server 1.

Upon receipt of the data by the Access Server 1, the Access Point interface 21 will temporarily store the data in the memory whilst the processor determines the intended destination of the data. The processor may also operate to translate the format of the data, if this is necessary. The data is then routed by the Access Server to the intended destination on either the LAN 2, the Internet 14 or alternatively, to a PBX network, as will be described in more detail below.

The traffic from Bluetooth devices (arriving through an Access Point or the Access Server) can be sent to the LAN through a number of different mechanisms; one is routing, another uses a technique called Proxy ARP to reduce the configuration needed. These mechanisms are bi-directional and also connect traffic from the LAN to Bluetooth devices.

Similarly, data can be transferred from the Access Server, via the Access Point interface 21 to an Access Point 2. In this case, the Access Point 2 receives the data and transfers it into the memory 33. The processor 32 then uses the data to determine the intended destination communication device before routing the data appropriately.

A number of different network configurations for transferring voice type calls via the Access Server are shown in Figures 4 to 7.

Figure 4 shows an example in which a connection to a PBX 40 is implemented, the Access Server 1 will have the ability to associate communications devices 3,4,5,6,7,8 such as Bluetooth phones and handsets as extensions of the PBX. This allows Bluetooth enabled phones to call phones 41,42 on the PBX 40, as well as making calls to public telephone networks 43, such as the PSTN (Public Switched Telephone Network) or POTS (Plain Old Telephone System).

For example, this enables the Bluetooth phone or headset to ring at the same time, or instead of a users desk phone 41,42. Indeed, the invention enables the Bluetooth phone to have all the features offered by the PBX as a minimum functionality; on top of this, some new features can be added.

The use of Bluetooth 3-in-1 phones which are capable of both Bluetooth and cellular communications allows users to use their cellular phone as their desk phone when in the office.

Where the PBX has no appropriate support for ISDN, the Access Server PBX interface 23 can be connected directly to the public network 43 as shown by the dotted line, to provide direct dial-in and dial out to Bluetooth phones and headsets.

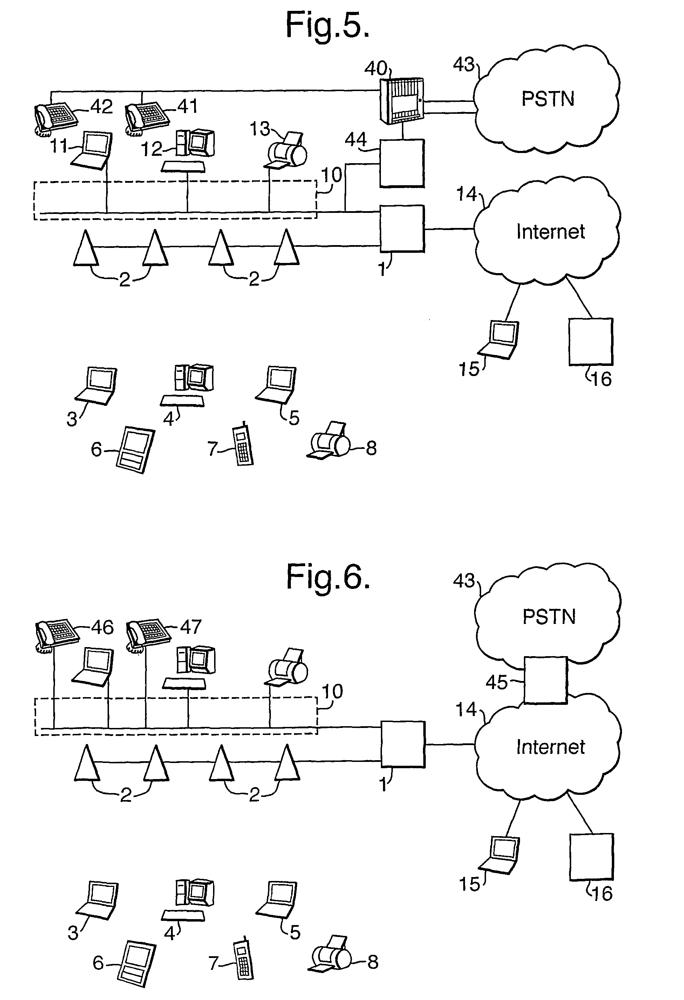

The Access Points 2 can also provide VolP (Voice Over IP) connectivity to the Access Server, as shown in Figure 5. In this example, the Access Server 1 is connected to the PBX 40 through a VolP gateway 44 connected to the LAN. The Access Points implement voice compression algorithms hence providing a scalable VolP solution (i.e. compression ability is increased with each Access Point).

In the example of Figure 6, VolP replaces the PBX 40 to allow connection to the telephone network 43. This is achieved by using a VolP gateway 45 positioned between the Internet 14 and the phone network 43, to allow all phone calls to be transferred via the Internet 14 and the Access Server 1. In this example Ethernet phones 46,47 can connect directly to the LAN 10, whilst the Access Server 1 provides a gateway from Bluetooth phones and headsets to the Internet and hence on to the phone network 43.

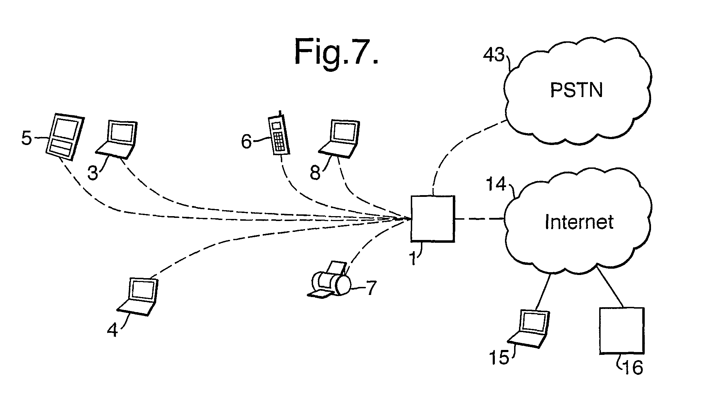

In the example of Figure 7, the GPRS system is used to provide constant on-line connection to the Internet. This is achieved using the GPRS transceiver 29 to provide the GPRS connection to the Internet 14, and the phone network 43, and using the Bluetooth radios 28 to provide the connection from the Access Server 1 to the communications devices 3,4,5,6,7,8. In circumstances where GPRS services do not provide sufficient bandwidth for all applications, the system may use dial-up ISDN to increase bandwidth. The always on full time connection to the Internet 14 provided by GPRS enables features such as VPN and public Web serving to be used, especially where additional bandwidth can be dialled up on demand.

In a mobile environment, it will be normal to use GSM phones for voice support. There may be added value in providing mobile voice connectivity via the Access Server.

Thus, the Access Server 1 provides wireless Intemet and LAN access to a variety of Bluetooth enabled communications devices including PCs, printers, PDAs and WAP phones. It will also provide services specially tailored for PDAs through the use of OBEX (Object Exchange protocol) and WAP technology in the Access Server 1.

It will be appreciated from this that many users may be connected to the Access Server via the Access Points at any one time. Accordingly, it is necessary for the entire network system to operate a registration procedure to ensure that only authorised users of the system can have access.

Accordingly, the Access Server 1 stores a list of authorised users in the memory 26. In each case, a user name and password is provided for the user so that when they first access the system, the user name and password must be entered.

The Access Server and Access Point can implement a number of different security solutions. These range from low level authentication procedures inherent in Bluetooth devices, to high level security features which allow simple, easy to use and deploy services which operate in conjunction with or instead of Bluetooth specific security features. This allows a deployment of the Access Server & Access Point in a range of sites and applications.

Once this has been completed, the Access Server will associate a device indication with the associated user name and password. This ensures that a record is maintained of which device is being used by the user. Accordingly, any subsequent data addressed to the user can be sent directly to the device.

Thus, if the user is using a wireless communications device 3,4,5,6,7,8, the Access Server will store an indication of the device, either as a particular address, device identifier, or the like, together with the user name and password. If any E-mail or the like is then received for that particular user, this can be directed to the device automatically.

The Access Server can store data concerning which radio 34,28 the user's communication device 3,4,5,6,7,8 is attached to. Every time a user's communication device 3,4,5,6,7,8 moves from one radio 28,34 to another there is a disconnection and reconnection process. To make this as seamless as possible a "roaming" capability is operated by the processor to allow the controlled hand-off from one radio to another.

Operation of the Access Server 1 to provide call control features will now be described. The example given describes providing call control features via WAP pages. However, the techniques of the invention are equally applicable to other protocols, such as Web pages, or the like, as will be appreciated by a person skilled in the art.

The call control features provided by the Access Server and the manner in which they are provided will depend upon the communications device 3,4,5,6,7,8 with which the Access Server 1 is communicating. The three main types of communications device are as follows:
1. Telephone handset with WAP features.
2. Telephone handset without WAP features but operated in conjunction with a PDA.
3. Headset operated in conjunction with a PDA.

Each of these scenarios will now be considered separately below.

The following example is a telephone handset with WAP features. In this example, the Access Server 1 is adapted to communicate with a communications device 3,4,5,6,7,8 such as a telephone handset 7 which includes the ability to provide WAP services to the user. In this case, the telephone handset will typically include a numeric keypad which allows telephone numbers to be dialed and answered, as well as allowing WAP pages to be accessed.

In this example, when the user of the handset 7 is to make a call, the call will be dialed directly from the handset, in the normal way. The Access Server 1 will then route the call to either the Internet interface 20 the LAN interface 22 or the PBX interface 23 as required. Once the call is established, voice data is transferred from the Bluetooth enabled handset via the Access Point 2 to the Access Server 1.

The handset 7 will generally be unable to provide additional call control features, such as call forward, call transfer and the like. The operating parameters of the handset 7 are maintained within the memory 26 of the Access Server 1 in accordance with a user ID as described briefly above. When the call is initiated the Access Server 1 detects that the telephone handset 7 is unable to provide the call transfer features and therefore instead operates to provide the features itself.

In order to achieve this, the processor 25 determines the current status of the call, which in this case is "In Progress", and uses this information to access a look-up table stored in the memory 26. The look-up table specifies for each type of call status a particular set of call control features which are available. Thus, in this case with the call currently in progress the call features available may include call transfer, call forward, call hold and the like.

The processor 25 obtains this information from the look-up table in the form of a WAP page. This WAP page is then transferred back via the respective Access Point 2 to the handset 7. In this case, because each Bluetooth connection allows both a synchronous voice channel and an asynchronous data channel to be provided, it is possible to send the WAP page to the handset, interspersed with the voice data, via a single Bluetooth connection. Alternatively, the handset 7 may be able to establish a second Bluetooth connection, either via a separate Bluetooth radio, or via the same Bluetooth radio allowing the WAP page to be transferred via a separate Bluetooth link.

Once the WAP page has been received by the handset 7 it will be displayed to the user. The user can then select a call control feature, such as call transfer. When this is selected, the user is effectively accessing a hyperlink. Accordingly, accessing the call transfer feature of the handset 7 will cause a signal to be transferred back to the processor 25 indicating to the processor 25 that the call transfer feature is to be implemented.

In this case, the call transfer is controlled by the Access Server 1. Accordingly, the signal causes the processor 25 to access a call transfer WAP page stored in the memory 26. The call transfer page sets out the instructions which should be followed in order to provide the call transfer feature. These will typically be as follows:-
1. Press "call transfer" button to place the current call on hold.
2. Dial number of telephone to which the call is to be transferred.
3. Press "call transfer" button to release the call from hold and join all three parties in a conference call.
4. Hang up phone.

In this case, when the call transfer button is to be used, the call transfer button will be presented to the user on the WAP page together with a representation of a keypad which allows telephone numbers to be entered. When the call transfer button is activated, appropriate control signals are sent from the handset 7 to the processor 25 of the Access Server 1 via the respective Bluetooth connection. In this case, the call transfer is implemented by the PBX 40 (Figures 4 and 5). Accordingly, the hyperlink associated with the call transfer button causes the processor to generate control signals causing the specified features to be implemented.

The control signals are transferred to the PBX via the respective PBX interface 23 causing the PBX 40 to perform the desired call function.

Typically, the call functions such as call transfer, call forward and call hold are implemented on a PBX 40 by generating specific dial tone combinations corresponding to a specific digit sequence. Accordingly, activating the call transfer button on the handset 7 causes the processor 25 to generate a series of tones which correspond to the call transfer digit sequence of the PBX 40. The tone sequence is transferred as a part of the call from the Access Server 1 to the destination telephone (for example telephones 41,42 from Figure 4) which causes the PBX 40 to place the call on hold.

Once the processor 25 has determined that the call has been placed on hold, the microprocessor will then after the WAP page to reflect the current status of the call.

Accordingly, the user of the handset 7 will determine that the call has been placed on hold and enter the new telephone number which the call is to be transferred.

The processor 25 will then transfer this information to the PBX as required.

Accordingly, operation between the Access Server 1 and the PBX 40 is equivalent to a telephone connected to the PBX with the telephone programmed to produce the correct tone sequences for call transfer and other such call functions. As a result, the PBX is ignorant to the fact that it is connected to the handset 7 which is not able to provide these features.

In the present example, once the call has been placed on hold, the user enters the telephone number of the telephone to which the call is to be transferred. Once this has been completed, the call is connected to the new telephone by the PBX 40.

The user then uses the call transfer button to cause the processor 25 to generate an appropriate tone sequence which causes the call to be taken off hold by the PBX 40. The user can then hang up.

The next example is a telephone handset without WAP features used with an associated PDA. In this example of the present invention, the handset 7 is unable to operate in accordance with the WAP protocol and is therefore unable to display WAP pages. As a result, it is not possible for the processor 25 to cause WAP pages to be displayed on the handset 7.

Accordingly, in this example an association is recorded in the memory 26 which associates the handset 7 with the PDA 6. This can be achieved for example by registering the MAC addresses of the handset 7 and the PDA 6 against a common user name.

In this example, if the user is to make a call via the handset 7 this may be initiated in the normal way. However, once the call is active the processor 25 will again determine that more call features can be provided. Accordingly, the processor 25 will again access the look-up table stored in memory 26 to obtain details of the call control features available, in accordance with the current call status.

Thus, again with the current call status being "In Progress" then the microprocessor 25 will access the look-up table stored in the memory 26 and obtain details of the "In Progress" WAP page. The processor 25 also determines from the operating parameters stored in memory 26 that the handset 7 cannot receive WAP pages. Accordingly, the processor 25 determines the MAC address of the PDA, associated with the user of the handset 7. The processor 25 then causes the WAP page to be transferred to the PDA 6.

In general, if the PDA is not activated, then the processor 25 will detect this, and will not send the WAP page. Accordingly the additional call control features will not be provided. As an alternative however, the processor 25 could send a signal to the PDA causing the PDA to be woken from a standby mode so that call control features can be provided.

If the PDA 6 is activated, an icon can be presented on the screen indicating that call control features are being provided. If the icon is selected, the appropriate WAP page can then be displayed to the user, allowing the user to access the call control features.

Again, the call control features are accessed in a similar manner to in the case described above. Thus, the user will use the PDA 6 to select one of the hyperlinks on the WAP page indicating the call control feature that is required. The processor 25 will react to this and generate control signals which are transferred via the internet interface, the PBX interface, or the LAN interface 20,23,21 to the appropriate communications device. Operation of this system will therefore be substantially as described with respect to the WAP enabled handset 7 above.

The final example is a headset and PDA. In this example, the headset is unable to dial calls and is therefore only able to answer received calls. In order to overcome this, the Access Server 1 of the present invention allows the PDA 6 to be used to initiate calls as well as to implement the higher level call control features described above.

Thus, in order to make a telephone call the user must select a telephone call option on the PDA 6. This causes the PDA 6 to generate a signal which is transferred to the microprocessor 25 of the Access Server 1. The microprocessor 25 determines that call control features are required for the headset associated with the PDA 6 via a respective user name (using the user name and operating parameters as described above).

Accordingly, the processor 25 examines the current status of connections with the headsets. In this case, with no call in progress the processor 25 accesses the look-up table stored in the memory 26 using the call status indication "Not In Progress". This will direct the processor 25 to a WAP page which is specifically configured to allow calls to be dialed. The WAP page will be transferred back to the PDA 6.

On presentation to the user of the PDA, the WAP page will typically take on the appearance of a numeric keypad from a telephone. Accordingly, the WAP page will present the user with a call/answer button together with numeric digits allowing a telephone number to be dialed. The user then dials the telephone number and presses the call button. The information entered by the user, including the telephone number is then transferred back to the processor 25, which uses the information to determine that a connection to the relevant telephone number is desired.

The processor 25 then causes a telephone connection to be initiated between the Access Server 1 and the appropriate telephone. Thus, for example in the network arrangement shown in Figure 4, the Access Server 1 can initiate a telephone call to one of the telephones 41,42 via the PBX 40.

Once the call has been established, the processor 25 of the Access Server 1 will cause a signal to be sent to the headset indicating that the call is to be answered. The headset can then be used to answer the call. In this case, the user of the telephone 41 will not be aware of this process. Accordingly, when the telephone 41 is answered, there will be a slight delay while the processor 25 contacts the headset and waits for the headset to be answered by the user. The telephone call will then continue in the normal way.

Once the telephone call has been established, the microprocessor 25 will determine that the call status is now "In Progress". Accordingly, the processor 25 will access the memory 26 and obtain an updated WAP page showing the call features now currently available. Again this will typically include call features such as call transfer, call hold, call forward and the like. In addition to these options however, the PDA is also usually presented with a call end function which allows the user to hang up the call from the PDA 6 instead of the headset.

Operation of the microprocessor 25 to implement the call transfer, call hold and call forward features will be as described above with respect to the previous examples.

It will be realized that the techniques of this example, notably dialing the call from a PDA could be implemented with any communications device, including telephones which already have a keypad.

## Claims

1. A call handling device (1) for connecting a wireless communications device having a limited number of call control features to a communications network, the call handling device (1) being adapted to provide additional call control features to the user of a wireless communications device, the call handling device comprising:
a transceiver (2) for maintaining a wireless connection between the call handling device (1) and the wireless communications device;
at least one port (20, 22, 23) for connecting the call handling device to the communications network; and,
a processor (25) for controlling the connections, the processor being adapted to:
determine control information representing the call control features available for the current connections;
transfer the control information to the user via a wireless connection;
determine the call control features selected by the user; and,
implement the selected call control features.

2. A call handling device according to claim 1, wherein the processor (25) is adapted to perform the step of transferring the control information to the user by:
establishing a second wireless connection with an alternative communications device used by the user; and,
transferring the control information to the alternative communications device.

3. A call handling device according to claim 1 or claim 2, wherein the call handling device (1) further comprises a store (26) for storing a number of sets of control information, and wherein the processor (25) is adapted to carry out the step of determining the control information representing the call control features available for the current connections by:
monitoring the status of any connections with the wireless communications device; and,
selecting one of the number of sets of control information stored in the store (26) in accordance with the call status.

4. A call handling device according to any of the preceding claims, wherein the processor (25) is adapted to transfer the control information to the user as one of a Web page or a WAP page.

5. A call handling device according to claim 4, when dependent on claim 3, wherein each set of control information comprises one of a Web page or a WAP page.

6. A call handling device according to any of the preceding claims, wherein processor (25) is adapted to perform the step of determining the call control features selected by the user by monitoring control signals received via the wireless connection from the user.

7. A call handling device according to any of the preceding claims, wherein the processor (25) is adapted to perform the step of implementing the selected call control features by generating control signals for transfer to the communications network, the communications network being responsive to the control signals to perform the desired call control features.

8. A call handling device according to any of the preceding claims, wherein the communications network is a PBX.

9. A call handling device according to any of the preceding claims, wherein the processor (25) is adapted to transfer the control information to the user's PDA.

10. A call handling device according to any of the preceding claims, wherein the call control features include at least one of: call dialing, call transfer, call hold, and call forward.

11. A call handling device according to any of the preceding claims, wherein the call handling device (1) is adapted to establish wireless connections in accordance with the Bluetooth protocol, the transceiver comprising a Bluetooth transceiver.

12. A communication system adapted to provide call control features to the user of the system, the system comprising:
a call handling device (1) according to any of the preceding claims; and
a wireless communications device (3, 4, 5, 6, 7, 8).

13. A communications system according to claim 12, wherein the control information includes the provision of a representation of at least one button on a graphical user interface of the wireless communications device.

14. A communications system according to claim 13, wherein the selection of the represented button causes the transfer of control signals from the wireless communications device to the call handling device (1).

15. A system according to claim 12, 13 or 14 when dependent on claim 11, wherein the wireless communications device is a Bluetooth enabled communications device.

## Patentansprüche

1. Anrufabwicklungsvorrichtung (1) zum Verbinden einer drahtlosen Kommunikationsvorrichtung mit einer begrenzten Anzahl von Anrufsteuerungsmerkmalen mit einem Kommunikationsnetz, wobei die Anrufabwicklungsvorrichtung (1) den Benutzer einer drahtlosen Kommunikationsvorrichtung mit zusätzlichen Anrufsteuerungmerkmalen versorgen kann, wobei die Anrufabwicklungsvorrichtung folgendes umfaßt:
einen Transceiver (2) zum Aufrechterhalten einer drahtlosen Verbindung zwischen der Anrufabwicklungsvorrichtung (1) und der drahtlosen Kommunikationsvorrichtung;
mindestens einen Anschluß (20, 22, 23) zum Verbinden der Anrufabwicklungsvorrichtung mit dem Kommunikationsnetz,
einen Prozessor (25) zum Steuern der Verbindungen, wobei der Prozessor
Steuerungsinformationen bestimmen kann, welche die für die laufenden Verbindungen verfügbaren Anrufsteuerungsmerkmale darstellen;
die Steuerungsinformationen über eine drahtlose Verbindung zu dem Benutzer übertragen kann; und
die gewählten Anrufsteuerungsmerkmale ausführen kann.

2. Anrufabwicklungsvorrichtung nach Anspruch 1, wobei der Prozessor (25) den Schritt des Übertragens der Steuerungsinformationen zu dem Benutzer durch
das Einrichten einer zweiten drahtlosen Verbindung mit einer von dem Benutzer benutzten, anderen Kommunikationsvorrichtung; und
das Übertragen der Steuerungsinformationen an die andere Kommunikationsvorrichtung
ausführen kann.

3. Anrufabwicklungsvorrichtung nach Anspruch 1 oder Anspruch 2, wobei die Anrufabwicklungsvorrichtung (1) ferner einen Speicher (26) zum Speichern einer Anzahl von Gruppen von Steuerungsinformationen umfaßt, und wobei der Prozessor (25) den Schritt des Bestimmens der Steuerungsinformationen, welche die für die laufenden Verbindungen verfügbaren Anrufsteuerungsmerkmale darstellen, durch
das Überwachen des Zustands aller Verbindungen mit der drahtlosen Kommunikationsvorrichtung; und
das Auswählen von einer von der Anzahl von in dem Speicher (26) gespeicherten Gruppen von Steuerungsinformationen gemäß dem Anrufstatus ausführen kann

4. Anrufabwicklungsvorrichtung nach einem der vorhergehenden Ansprüche, wobei der Prozessor (25) die Steuerungsinformationen als eine von einer Webseite oder einer WAP-Seite zu dem Benutzer übertragen kann.

5. Anrufabwicklungsvorrichtung nach Anspruch 4 bei Abhängigkeit von Anspruch 3, wobei jede Gruppe von Steuerungsinformationen eine von einer Webseite oder einer WAP-Seite umfaßt.

6. Anrufabwicklungsvorrichtung nach einem der vorhergehenden Ansprüche, wobei der Prozessor (25) den Schritt des Bestimmens der von dem Benutzer gewählten Anrufsteuerungsmerkmale durch Überwachen von Steuerungssignalen, die über die drahtlose Verbindung von dem Benutzer empfangen werden, ausführen kann.

7. Anrufabwicklungsvorrichtung nach einem der vorhergehenden Ansprüche, wobei der Prozessor (25) den Schritt des Ausführens der gewählten Anrufsteuerungsmerkmale durch das Generieren von Steuerungssignalen zur Übertragung zu dem Kommunikationsnetz ausführen kann, wobei das Kommunikationsnetz auf die Steuerungssignale zum Ausführen der gewünschten Anrufsteuerungsmerkmale ansprechen kann.

8. Anrufabwicklungsvorrichtung nach einem der vorhergehenden Ansprüche, wobei das Kommunikationsnetz ein Nebenstellenanlage ist.

9. Anrufabwicklungsvorrichtung nach einem der vorhergehenden Ansprüche, wobei der Prozessor (25) die Steuerungsinformationen zu dem PDA-Gerät des Benutzers übertragen kann.

10. Anrufabwicklungsvorrichtung nach einem der vorhergehenden Ansprüche, wobei die Anrufsteuerungsmerkmale mindestens eines von Anrufsanwahl, Anrufsweitergabe, Anrufshaltung und Anrufsweiterschaltung umfassen.

11. Anrufabwicklungsvorrichtung nach einem der vorhergehenden Ansprüche, wobei die Anrufabwicklungsvorrichtung (1) drahtlose Verbindungen gemäß dem Bluetooth-Protokoll herstellen kann, wobei der Transceiver einen Bluetooth-Transceiver umfaßt.

12. Kommunikationssystem, das den Benutzer des Systems mit Anrufsteuerungsmerkmalen versehen kann, wobei das System folgendes umfaßt:
eine Anrufabwicklungsvorrichtung (1) gemäß einem der vorhergehenden Ansprüche; und
eine drahtlose Kommunikationsvorrichtung (3, 4, 5, 6 7, 8).

13. Kommunikationssystem nach Anspruch 12, wobei die Steuerungsinformationen das Bereitstellen einer Darstellung von mindestens einem Knopf auf einer graphischen Benutzeroberfläche der drahtlosen Kommunikationsvorrichtung umfaßt.

14. Kommunikationssystem nach Anspruch 13, wobei durch die Wahl des dargestellten Knopfes bewirkt wird, daß Steuerungssignale von der drahtlosen Kommunikationsvorrichtung zu der Anrufabwicklungsvorrichtung (1) übertragen werden.

15. System nach Anspruch 12, 13 oder 14 bei Abhängigkeit von Anspruch 11, wobei die drahtlose Kommunikationsvorrichtung eine mit Bluetooth freigeschaltete Kommunikationsvorrichtung ist.

## Revendications

1. Dispositif (1) d'acheminement d'appels destiné à connecter un dispositif de communication sans fil présentant un nombre limité de caractéristiques de commande d'appel, à un réseau de communication, le dispositif (1) d'acheminement d'appels étant adapté pour fournir des caractéristiques de commande d'appel additionnelle à l'utilisateur d'un dispositif de communication sans fil, comprenant :
un émetteur-récepteur (2), pour maintenir une connexion sans fil entre le dispositif (1) d'acheminement d'appels et le dispositif de communication sans fil;
au moins un port (20, 22, 23) destiné à connecter le dispositif d'acheminement d'appels au réseau de communication ; et
un processeur (25) destiné à commander les connexions, le processeur étant adapté pour :
déterminer une information de commande représentant les caractéristiques de commande d'appels disponibles pour les connexions en cours ;
transférer l'information de commande à l'utilisateur par l'intermédiaire d'une connexion sans fil ;
déterminer les caractéristiques de commande d'appels choisies par l'utilisateur ; et
mettre en oeuvre les caractéristiques de commande d'appels choisies.

2. Dispositif d'acheminement d'appels selon la revendication 1, dans lequel le processeur (25) est adapté pour effectuer l'étape de transfert de l'information de commande à l'utilisateur par :
établissement d'une seconde connexion sans fil avec un autre dispositif de communication utilisé par l'utilisateur ; et,
transfert de l'information de commande à l'autre dispositif de communication.

3. Dispositif d'acheminement d'appels selon la revendication 1 ou la revendication 2, dans lequel le dispositif (1) d'acheminement d'appels comprend de plus une mémoire (26) pour mémoriser un certain nombre de jeux d'informations de commande, et dans lequel le processeur (25) est adapté pour effectuer l'étape consistant à déterminer l'information de commande représentant les caractéristiques de commande d'appels disponibles pour les connexions en cours, en :
surveillant l'état de toute connexion avec le dispositif de communication sans fil ; et,
choisissant l'un parmi le nombre de jeux d'informations de commande mémorisés dans la mémoire (26) en fonction de l'état des appels.

4. Dispositif d'acheminement d'appels selon l'une quelconque des revendications précédentes, dans lequel le processeur (25) est adapté pour transférer l'information de commande à l'utilisateur, sous une forme parmi une page Web et une page WAP.

5. Dispositif d'acheminement d'appels selon la revendication 4, lorsqu'elle dépend de la revendication 3, dans lequel chaque jeu d'informations de commande comprend une page Web ou une page WAP.

6. Dispositif d'acheminement d'appels selon l'une quelconque des revendications précédentes, dans lequel le processeur (25) est adapté pour effectuer l'étape consistant à déterminer les caractéristiques de commande d'appel choisies par l'utilisateur, en surveillant les signaux de commande reçus par l'intermédiaire de la connexion sans fil provenant de l'utilisateur.

7. Dispositif d'acheminement d'appels selon l'une quelconque des revendications précédentes, dans lequel le processeur (25) est adapté pour effectuer l'étape consistant à mettre en oeuvre les caractéristiques de commande d'appel choisies en générant des signaux de commande pour un transfert au réseau de communication, le réseau de communication étant sensible aux signaux de commande pour établir les caractéristiques de commande d'appel souhaitée.

8. Dispositif d'acheminement d'appels selon l'une quelconque des revendications précédentes, dans lequel le réseau de communications est un PBX.

9. Dispositif d'acheminement d'appels selon l'une quelconque des revendications précédentes, dans lequel le processeur (25) est adapté pour transférer l'information de commande au PDA de l'utilisateur.

10. Dispositif d'acheminement d'appels selon l'une quelconque des revendications précédentes, dans lequel les caractéristiques de commande d'appel comprennent au moins l'un parmi : établissement d'un appel, transfert d'appel, mise en attente et suivi d'appel.

11. Dispositif d'acheminement d'appels selon l'une quelconque des revendications précédentes, dans lequel le dispositif d'acheminement d'appels (1) est adapté pour établir des connexions sans fil selon le protocole Bluetooth, l'émetteur-récepteur étant constitué d'un émetteur-récepteur Bluetooth.

12. Système de communication adapté pour fournir des caractéristiques de commande d'appel à l'utilisateur du système, le système comprenant : un dispositif (1) d'acheminement d'appels selon l'une quelconque des revendications précédentes ; et un dispositif de communication sans fil (3, 4, 5, 6, 7, 8).

13. Système de communication selon la revendication 12, dans lequel l'information de commande comprend la fourniture d'une représentation d'au moins un bouton sur l'interface graphique de l'utilisateur du dispositif de communication sans fil.

14. Système de communication selon la revendication 13, dans lequel la sélection du bouton représenté entraîne le transfert de signaux de commande du dispositif de communication sans fil au dispositif (1) d'acheminement d'appels.

15. Système selon la revendication 12, 13 ou 14, lorsqu'elle dépend de la revendication 11, dans lequel le dispositif de communication sans fil est un dispositif de communication adapté Bluethooth.
